# EUROPÄISCHE PATENTSCHRIFT

(11) **EP 1 525 130 B1**
(45) Veröffentlichungstag und Bekanntmachung des Hinweises auf die Patenterteilung: **28.03.2007**
(21) Anmeldenummer: 03787678.6
(22) Anmeldetag: 17.07.2003
(51) Int. Cl.: B62D 1/184

(54) **POSITIONSEINSTELLVORRICHTUNG FÜR KRAFTFAHRZEUGLENKSÄULEN**
POSITION SETTING DEVICE FOR MOTOR VEHICLE STEERING COLUMNS
DISPOSITIF DE REGLAGE DE POSITION DESTINE A DES COLONNES DE DIRECTION DE VEHICULES AUTOMOBILES

(30) Priorität: 30.07.2002 DE 10234514
(43) Veröffentlichungstag der Anmeldung: 27.04.2005
(73) Patentinhaber: ZF Lenksysteme Nacam GmbH, 28259 Bremen (DE)
(72) Erfinder: UPHAUS, Ludger, 49434 Neuenkirchen-Vörden (DE); GRAMS, Kai-Uwe, 49692 Cappeln (DE); HORSTMANN, Holger, 27243 Harpstedt (DE)
(86) Internationale Anmeldenummer: PCT/DE2003/002402
(87) Internationale Veröffentlichungsnummer: WO 2004/016492

(56) Entgegenhaltungen:
- DE-A- 19 805 289
- GB-A- 2 352 285

## Beschreibung

Die vorliegende Erfindung betrifft eine Positionseinstellvorrichtung für eine verstellbare Kraftfahrzeuglenksäule.
Für einen verbesserten Fahrkomfort werden moderne Kraftfahrzeuge mit verstellbaren Kraftfahrzeuglenksäulen ausgestattet. Diese Lenksäulen sind sowohl in der Höhe als auch entlang der Lenksäulenachse verstellbar. Ein Kraftfahrzeuglenker kann bei diesen Lenksäulen das Lenkrad in eine für ihn bequemen Position bringen. Zum Einstellen einer gewünschten Lenkradposition löst der Fahrzeuglenker die Arretierung der Lenksäule an einer Positionseinstellvorrichtung. Nach dem Neupositionieren des Lenkrads wird die Lenksäule an der Positionseinstellvorrichtung wieder arretiert.
Bei einem Großteil von Fahrzeugtypen wird die Kraftfahrzeuglenksäule, im Folgenden allgemein als Lenksäule bezeichnet, durch den Fußraum des Kraftfahrzeuglenkers bzw. Fahrers geführt. Um Verletzungen des Fahrers im Falle eines Unfalls zu vermeiden, ist darauf zu achten, dass der von der Positionseinstellvorrichtung im Fußraum des Fahrers beanspruchte Platz klein genug ist um Verletzungen des Fahrers an der Positionseinstellvorrichtung auszuschließen.
Die Positionseinstellvorrichtung einer verstellbaren Kraftfahrzeuglenksäule lässt ein Verschieben des Lenkrads axial zur Lenkachse und in vertikaler Richtung zu. Die Positionseinstellvorrichtung muss zuverlässig arbeiten und darf das zielgenaue Lenken eines Kraftfahrzeugs nicht beeinträchtigen. Insbesondere darf es nicht Ursache ungewöhnlicher Lenkkorrekturen sein. Ein Spiel in den mechanischen Teilen der Einstellvorrichtung ist daher unzulässig und zumindest die Arretierung muss zuverlässig für beide Verschieberichtungen gleichzeitig erfolgen. Es darf daher nicht eine der beiden Verschieberichtungen noch bzw. schon arretiert sein, während die andere bereits oder noch entriegelt ist.
Die DE 198 05 289 A1 offenbart bereits eine gattungsgemäße Positionseinstellung für eine Kraftfahrzeuglenksäule, bei welcher ein erster Träger zur Verbindung der Positionseinstellvorrichtung mit der Kraftfahrzeuglenksäule und ein zweiter Träger zur Verbindung der Positionseinstellvorrichtung mit der Karosserie des Fahrzeuges gezeigt werden. Ferner ist am ersten Träger eine erste Zahnleiste für eine erste Verstellrichtung und am zweiten Träger eine zweite Zahnleiste für eine zweite Verstellrichtung angeordnet. Mit der ersten Zahnleiste kann ein erstes Rastelement mit einer Reihe von Rastzähnen in Eingriff gebracht werden und mit der zweiten Zahnleiste kann ein zweites Rastelement mit einer Reihe von Rastzähnen in Eingriff gebracht werden. Das erste und zweite Rastelement werden mit der jeweils ersten und zweiten Zahnleiste simultan mittels eines Klemmmechanismus ver- und entriegelt. Hierzu sind das erste und zweite Rastelement auf einem Bolzen angeordnet, wobei zwischen dem ersten und zweiten Rastelement ein Abstandhalter sowie jeweils eine Druckfeder zwischen Abstandhalter und dem jeweiligen Rastelement vorgesehen ist.

Während der Verriegelung der Rastelemente mit der jeweiligen Zahnleiste bewegen sich die Rastelemente aufeinander zu, während sie sich bei der Entriegelung voneinander weg bewegen. Dies ist insbesondere hinsichtlich des erforderlichen Hubweges des Bolzens nachteilig, da dieser der Summe der Zahnhöhe beider Zahnleisten entsprechen muss. Zudem ist auf Grund toleranzbcdingter unterschiedlicher Federraten nicht gewährleistet, dass beide Rastelemente zum gleichen Zeitpunkt in die Zahnleiste eingreifen bzw. einen Formschluss mit der jeweiligen Zahnleiste herstellen, so dass keine zuverlässige Arretierung beider Verstellrichtungen der Kraftfahrzeuglenksäule gegeben ist.
Die GB 2 352 285 A zeigt ferner eine Positionseinstellvorrichtung für eine Kraftfahrzeuglenksäule mit lediglich einem Rastelement, welches in ein komplementär ausgebildetes Gegenstück eingreift. Hierzu ist das Rastelement mit einer Vielzahl von kegel- oder pyramidenförmigen Erhebungen versehen, welche in entsprechende Ausnehmungen des Gegenstücks eingreifen, wenn das Rastelement verriegelt wird. Mit dieser Vorrichtung ist zwar möglich mit lediglich einem Rastelement und einem entsprechenden Gegenstück eine Verschiebung der Kraftfahrzeuglenksäule sowohl in vertikaler als auch in horizontaler Richtung vorzunehmen, allerdings erfordert das Rastelement und das Gegenstück eine hohe Genauigkeit hinsichtlich der Formgebung miteinander in Eingriff stehenden Konturen um die auftretenden Kräfte übertragen zu können, so dass diese Vorrichtung relativ kostenintensiv ist.
Es ist daher Aufgabe der vorliegenden Erfindung, eine Positionseinstellvorrichtung für eine Kraftfahrzeuglenksäule anzugeben, die eine zuverlässige Bedienung gewährleistet und kein Verletzungspotential darstellt.
Die Aufgabe wird gemäß, den unabhängigen Ansprüchen der Erfindung gelöst. Die Erfindung wird in ihren abhängigen Ansprüchen weitergebildet.
Die Lösung obiger Aufgabe erfolgt erfindungsgemäß durch eine Positionseinstellvorrichtung für eine Kraftfahrzeuglenksäule mit einem ersten Träger zur Verbindung der Positionseinstellvorrichtung mit der Kraftfahrzeuglenksäule, einem zweiten Träger zur Verbindung der Positionseinstellvorrichtung mit der Karosserie eines Kraftfahrzeugs, einer am ersten Träger angeordneten ersten Zahnleiste mit zumindest einer Reihe von Rastzähnen und einer Ausrichtung der Reihe von Rastzähnen in Richtung, also beispielsweise parallel zu einer ersten Verstellrichtung, einer am zweiten Träger angeordneten zweiten Zahnleiste mit zumindest einer Reihe von Rastzähnen und einer Ausrichtung der Reihe von Rastzähnen in Richtung, also beispielsweise parallel zu einer zweiten Verstellrichtung, einem ersten Rastelement mit zumindest einer Reihe von Rastzähnen, die mit der Reihe von Rastzähnen der ersten Zahnleiste in Eingriff gebracht werden kann, einem zweiten Rastelement mit zumindest einer Reihe von Rastzähnen, die mit der Reihe von Rastzähnen der zweiten Zahnleiste in Eingriff gebracht werden kann, einem Abstandshalter zur definierten Beabstandung des zweiten Rastelements relativ zum ersten Rastelement und einem Klemmmechanismus, zur simultanen Ver-und Entriegelung des ersten und zweiten Rastelements mit jeweils der ersten bzw. zweiten Zahnleiste dadurch gekennzeichnet, daß während der Ver- und Entriegelung die Beabstandung zwischen dem ersten und zweiten Rastelement konstant ist.

Die oben gestellte Aufgabe wird ferner gelöst von einer Kraftfahrzeuglenksäule mit einer erfindungsgemäßen Positionseinstellvorrichtung, wobei die erste Verstellrichtung der Positionseinstellvorrichtung axial zur Kraftfahrzeuglenksäule und die zweite Verstellrichtung der Positionseinstellvorrichtung senkrecht zur Achse der Kraftfahrzeuglenksäule oder entlang eines Bogens um einen Schwenkpunkt ausgerichtet ist.

Die Anordnung der Zahnleisten an den Trägern der Positionseinstellvorrichtung gestattet eine Ausführung der Vorrichtung mit geringer Baugröße und geringem Verletzungspotential. Eine zuverlässige Bedienung wird durch die vorteilhafte synchrone Ver- bzw. Entriegelung beider Verstellrichtungen durch die definierte Beabstandung der beiden Rastelemente zueinander und den auf beide Rastelemente simultan wirkenden Klemmmechanismus erzielt.

Abhängig von den Fertigungstoleranzen der Elemente der erfindungsgemäßen Positionseintellvorrichtung kann der notwendige Abstand zwischen den beiden Rastelementen von einer fertiggestellten Positionseinstellvorrichtung zur nächsten variieren. Die Position des zweiten Rastelements auf dem Abstandhalter ist daher vorteilhaft zumindest einmal justierbar. Die Position des zweiten Rastelements auf dem Abstandhalter kann dabei mittels einer Schraubgewindeverbindung, eines einmaligen Aufpressvorgangs, einer Federscheibe oder mittels Materialaufstauchung justierbar sein.

Für eine einfache und unkomplizierte Justage ist die Justierung der Position des zweiten Rastelements auf dem Abstandhalter im Außenbereich der Positionseinstellvorrichtung vornehmbar.

Eine effektive Realisierung einer simultanen Ver- und Entriegelung des ersten und zweiten Rastelements mit der jeweils ersten bzw. zweiten Zahnleiste lässt sich vorteilhaft mit einem stangenförmigen Fortsatz des Klemmmechanismus erreichen, wobei der stangenförmige Fortsatz beweglich durch den ersten und zweiten Träger, die erste und zweite Zahnleiste, das erste und zweite Rastelement und den Abstandhalter geführt ist. Zur Begrenzung einer Bewegung von auf dem stangenförmigen Fortsatz verschiebbaren Elementen der Positionseinstellvorrichtung über ein Ende des stagenförmigen Fortsatzes hinaus, weist dieser vorteilhaft ein Sicherungselement auf. Eine definierte Führung der Rastelemente zur Ver- und Entriegelung wird vorteilhaft und auf einfache Weise mit einer Druckfeder erreicht, mittels derer das erste und das zweite Rastelement gegen das Sicherungselement des stangenförmigen Fortsatzes gedrückt gehalten sind.

Eine kompakte Bauweise und eine geringe Fehlerquote beim Zusammenbau der erfindungsgemäßen Positionseinstellvorrichtung wird erreicht, indem die erste Zahnleiste und der erste Träger und/oder die zweite Zahnleiste und der zweite Träger jeweils zusammen ein Bauteil formen. Zusätzlich kann durch diese Integration der Zahnleisten in den jeweiligen Träger eine kostengünstigere Herstellung der Positionseinstellvorrichtung erzielt werden.

Bevorzugt ermöglicht die zweite Verstellrichtung der Positionseinstellvorrichtung eine Höhen- oder eine Neigungsverstellung der Kraftfahrzeuglenksäule, sodass das Lenkrad ergonomisch zum Fahrer positioniert werden kann.

Im Folgenden wird die Erfindung anhand von Ausführungsbeispielen näher erläutert, wobei auf folgende Figuren verwiesen wird. Es zeigen:
- Fig. 1: eine Kraftfahrzeuglenksäule mit einer Positionseinstellvorrichtung gemäß der vorliegenden Erfindung in einer isometrischen Darstellung,
- Fig. 2: eine Explosionsdarstellung der Bauteile einer erfindungsgemäßen Positionseinstellvorrichtung,
- Fig. 3: eine Seitenansicht einer Krafliahrzeuglenksäule mit einer Positionseinstellvorrichtung gemäß der vorliegenden Erfindung,
- Fig. 4: eine Frontansicht einer Kraftfahrzeuglenksäule mit einer Positionseinstellvorrichtung gemäß der vorliegenden Erfindung,
- Fig. 5: eine Kraftfahrzeuglenksäule mit einer erfindungsgemäßen Positionseinstellvorrichtung in einer Schnittdarstellung,
- Fig. 6: eine Kraftfahrzeuglenksäule mit einer erfindungsgemäßen Positionseinstellvorrichtung im Querschnitt, und
- Fig. 7: eine Detailzeichnung des Querschnittes des Versiellmechanismus' einer erfindungsgemäßen Positionseinstellvorrichtung für eine Kraftfahrzeuglenksäule.

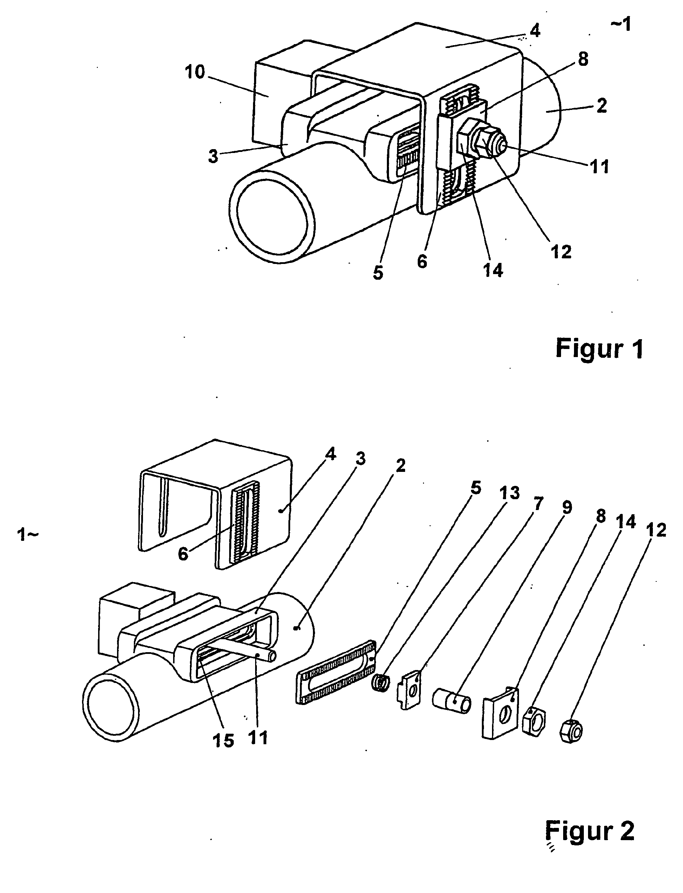

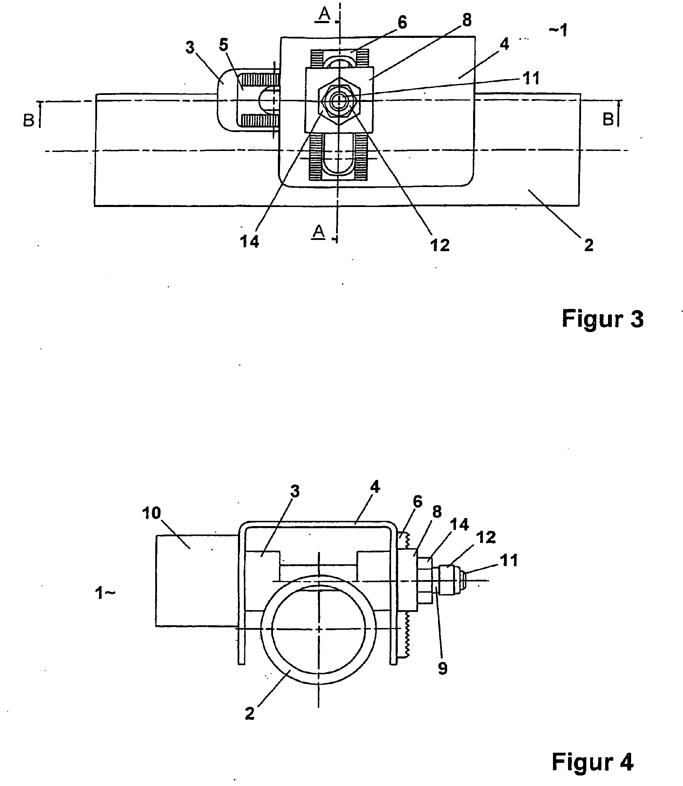

Die Fig. 1 zeigt eine bevorzugte Ausführungsform einer erfindungsgemäßen Positionseinstellvorrichtung 1 angebracht am Lenksäulenkörper 2 bzw. Säulenmantel 2 einer Kraftfahrzeuglenksäule. Die Achse des Säulenmantels entspricht der Achse der Kraftfahrzeuglenksäule. Ein erster Träger 3 dient als Lenksäulenträger zur Befestigung der Positionseinstellvorrichtung 1 an der Lenksäule, z.B. über eine mechanische Verbindung mit dem Lenksäulenkörper 2 oder einem Lenksäulenmantel 2. Wie in den Fig. 1 bis 7 dargestellt, kann der Ixnksäulenträger 3 als Bestandteil des Lenksäulenkörpers 2 bzw. des Säulenmantels 2 ausgebildet sein.

Im Hinblick auf eine einfachere Darstellung des erfindungsgemäßen Sachverhalts wird im Folgenden der Begriff Lenksäule auch als Synonym für einen Lenksäulenkörper 2 bzw. Lenksäulenmantel 2 verwendet.

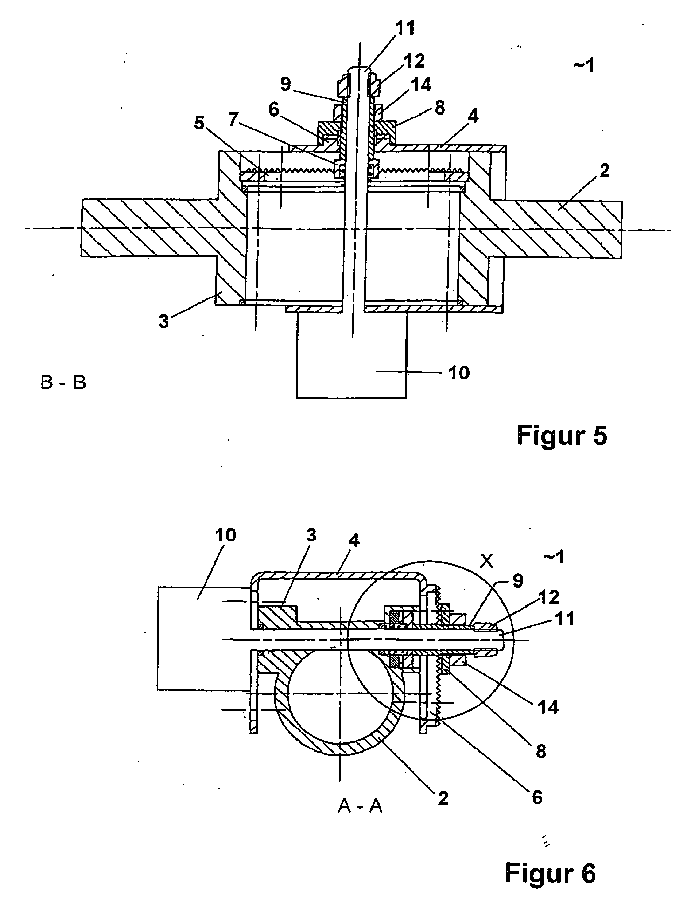

Lenksäule 2 und Lenksäulenträger 3 werden von einem zweiten Träger, dem Karosserieträger 4 umschlossen, der zur Fixierung der Positionseinstellvorrichtung an der Karosserie eines Kraftfahrzeugs dient. Die Schenkel des U-förmig ausgebildeten Karosserieträgers 4 liegen, wie den Fig. 5 und 6 zu entnehmen, im montierten Zustand der Positionseinstellvorrichtung 1 an den Stirnflächen des Lenksäulenträger 3 an.

Der Lenksäulenträger 3 weist eine durchgehende Aussparung quer zur Lenksäulenachse auf, deren längliche Ausdehnung parallel zur Lenksäulenachse angeordnet ist. Durch diese Aussparung kann, wie in der Fig. 2 zu sehen, ein Fortsatz 11 eines geeigneten Klemmmechanismus 10 geführt und parallel zur Kraftfabrzeuglenkachse verschoben werden.

An der dem Verrastungsmechanismus der Positionseinstellvorrichtung zugewandten Seite weist der Lenksäulenträger 3 eine Aussparung auf, deren laterale Abmessungen zur Aufnahme der ersten, axialen Zahnleiste 5 geeignet sind und deren Tiefe groß genug ist, um die axiale Zahnleiste 5 und ein darauf befindliches erstes Rastelement 7 aufzunehmen. Dies gilt auch für den Fall, dass das erste Rastelement 7 und die Zahnleiste für axiale Verschiebung 5 soweit voneinander beabstandet sind, dass sich die Rastzähne der beiden Bauteile auch bei einem Verschieben nicht berühren können. An der Zahnleiste und am Rastelement sind eine oder mehrere Reihen von Rastzähnen ausgebildet. Die Rastzähne des Rastelements sind hierbei komplementär zu denen der Zahnleiste geformt

Eine längliche und durchgehende Aussparung in der Zahnleiste 5 gestattet ein Durchführen des stangenförmigen Fortsatzes 11 der Klemmvorrichtung 10, z.B. eines Bolzens. Die lateralen Dimensionen dieser Aussparung sind dabei etwas größer als die der durchgehenden Aussparung des Lenksäulenträgers 3, sodass in der länglichen Aussparung der axialen Zahnleiste 5 eine Druckfeder 13 auf dem Lenksäulenträger 3 geführt werden kann. Der Außendurchmesser der Feder 13 ist dabei größer als die Öffnung der durchgehenden Aussparung im Lenksäulenträger 3 quer zur Lenksäulenachse.

Eine längliche Nut im Boden der stirnseitigen Aussparung des Lenksäulenträgers 3 dient zur Aufnahme einer Gleitscheibe 15 auf der die Druckfeder 13 parallel zur Lenksäulenachse entlang der durchgehenden Aussparung des Lenksäulenträgers 3 verschoben werden kann.

Alternativ zur dargestellten Ausführungsform kann die axiale Zahnleiste 5 als Bestandteil des Lenksäulenträgers 3 ausgeführt werden womit der Bauteileaufwand reduziert wird. Die damit erzielte Kostenreduktion bei der Herstellung der Bauteile der Positionseinstellvorrichtung wird ergänzt von einer Kostenreduktion durch eine vereinfachte Montage und einer geringeren Fehlerhäufigkeit beim Zusammenbau der Positionseinstellvorrichtung.

Der Karosserieträger 4 wird bevorzugt als U-förmige Blechwange ausgeführt, mit zwei sich gegenüber liegenden Längsschlitzen in den Schenkeln des Trägers. Die Längsrichtung der Schlitze ist parallel zur Schenkelrichtung des Trägers und bei montiertem Zustand der Positionseinstellvorrichtung senkrecht zur durchgehenden Aussparung des Lenksäulenträgers 3. Eine zweite, vertikale Zahnleiste 6 ist so an einem der Schenkel angebracht, dass der Längsschlitz dieses Schenkels sich zentral in einer durchgehenden längsförmigen Aussparung der vertikalen Zahnleiste 6 befindet. Analog zur axialen Zahnleiste ist die vertikale Zahnleiste mit einer oder mehreren Reihen von Rastzähnen ausgebildet, deren Form komplementär zu den eines zugehörigen vertikalen Rastelements 8 ausgeführt ist.

Betrachtet man die Basis des U-förmigen Karosserieträgers 4 als Bezugsebene, so kann die Lenksäule 2 entlang der Längsschlitze in den Schenkeln des Karosserieträgers 4 von dieser weg bzw. zu dieser hin bewegt und entlang der durchgehenden Aussparung im Lenksäulenträger 3 parallel zu dieser Bezugsebene verschoben werden.

Im montierten Zustand der Positionseinstellvorrichtung greift der, an einer geeigneten Klemmvorrichtung 10 angebrachte stangenförmige Fortsatz 11, beispielsweise ein Bolzen, durch die durchgehende längliche Aussparungen des Lenksäulenträgers 3 und die axiale Zahnleiste 5 hindurch. Über das freie Ende des Bolzens werden die Bauteile des Verrastmechanismus der Positioniereinstellvorrichtung auf ihre Positionen geschoben. Zu den Bauteilen des Verrastmechanismus zählen die Gleitscheibe 15, die Druckfeder 13, das erste Rastelement 7 für die axiale Verrastung, der Abstandshalter 9 zur definierten Beabstandung des zweiten Rastelementes 8 für die vertikale Verrastung relativ zum ersten Rastelement 7 und ein Sicherungselement 12. Vertikal bezeichnet hierbei eine Richtung senkrecht zur Längsachse der Lenksäule 2 und parallel zur Schenkelrichtung des U-förmigen Karosserieträgers 4. Das Sicherungselement 12 begrenzt die Bewegung der auf dem Bolzen 11 beweglich aufgebrachten Bauteile in Richtung dessen freien Endes.

Als Klemmmechanismus 10 können bekannte Konstruktionen verwendet werden. Bei Lösen des Klemmmechanismus 10, wird der Bolzen 11 in Richtung seines freien Endes verschoben. Die zur Verfügung stehende Länge des Bolzens 11 im Verrastmechanismus wird dadurch größer. Beweglich auf dem Bolzen gelagerte Bauteile können damit relativ zu den fest an den Trägern angeordneten Bauteilen verschoben werden. Insbesondere können die Rastelemente hierbei aus den Zahnleisten geschoben werden. Bei Schließen des Klemmmechanismus 10 werden die Rastelemente durch den Bolzen auf die Zahnleisten gedrückt.

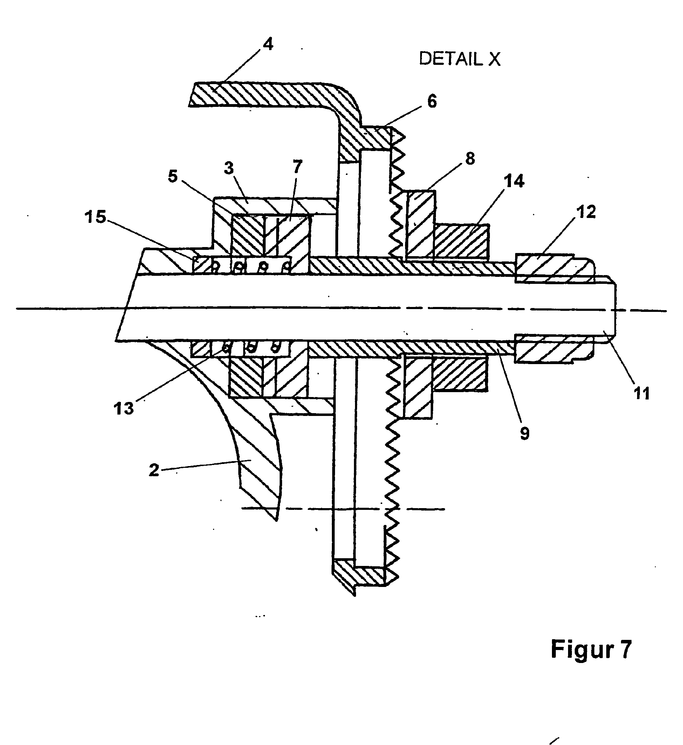

Bei gelöstem Klemmmechanismus 10 kann die Lenksäule 2 relativ zum Karosserieträger 4 verschoben werden. Die Konstruktion ermöglicht eine, mit Bezug auf die Basis des U-förmigen Karosserieträgers 4 vertikale Verschiebung sowie eine axiale Verschiebung in Richtung der Lenkachse. Im geklemmten Zustand des Klemmmechanismus 10 wird ein Verschieben der Lenksäule 2 durch den Venastmechanismus, wie er im Folgenden anhand der Fig. 7 näher beschrieben wird, unterbunden.

Fig. 7 ist eine Detaildarstellung des Verrastmechanismus der in der Fig. 6 im Querschnitt dargestellten erfindungsgemäßen Positionseinstellvorrichtung 1. Der Bolzen 11 des Klemmmechanismus 10 bildet die zentrale Achse des Verrastmechanismus. Der Klemmmechanismus 10 ist gegen einen Schenkel des Kraftfahrzeugträgers 4 abgestützt, sodass bei Schließen des Klemmmechanismus eine Kraft auf die Elemente des Verrastmechanismus ausgeübt werden kann.

In der Fig. 7 ist der Verrastmechanismus im geschlossenen Zustand dargestellt. In diesem geschlossenen Zustand liegen die Rastelemente 7 und 8 so auf den jeweiligen Zahnleisten 5 und 6, dass die Zähne der Rastelemente formschlüssig in die Rastzähne auf den Zahnleisten eingreifen. Unter formschlüssig wird hierbei verstanden, dass die Rastzähne der Rastelemente an den durch die Konstruktion vorgesehenen Berührungsflächen (so weit . wie möglich) vollständig mit den gegenüber liegenden Rastzähnen der Zahnleiste in Kontakt stehen. Insbesondere ist der Begriff formschlüssig im Unterschied zu einem (unvollständigen) Kämmen der Rastzahnreihen zu verstehen, bei dem die Rastzähne der Rastelemente mit den Rastzähnen der Zahnleisten nur soweit verschränkt sind, dass zwar ein Verschieben des Rastelements entlang der Reihe von Rastzähnen der Zahnleiste verhindert wird, die Berührungsflächen der sich gegenüber liegenden Rastzähne aber nur teilweise oder gar nicht miteinander in Kontakt stehen. Für eine zuverlässige Arretierung der Kraftfahrzeuglenksäule 2 ist eine doppelt formschlüssige Verrastung erforderlich, also ein gleichzeitiger Formschluss der axialen wie der vertikalen Verrastelemente.

Der Abstand zwischen axialer Zahnleiste 5 und vertikaler Zahnleiste 6 muss daher dem Abstand zwischen dem axialen Rastelement 7 und dem vertikalen Rastelement 8 entsprechen. Bei Lösen der Verrastung werden die Rastelemente 7, 8 aus der Verzahnung der Zahnleiste 5 bzw. 6 herausgehoben bis die Rastzähne beider Teile nicht mehr verschränkt sind bzw. die Spitzen der Rastzähne beider Teile 5 und 7 sowie 6 und 8 im leichten Abstand zueinander stehen. Dieser Vorgang wird auch als Entriegelung bezeichnet Entspricht der Abstand der Rastelemente 7 und 8 nicht dem Abstand der Zahnleisten 5 und 6, so kann eine der beiden bereits entriegelt sein, während sich die andere noch in einem gekämmten Zustand befindet. Erfindungsgemäß ist daher vorgesehen, den Abstand zwischen den beiden Rastelementen 7 und 8 für beide Betriebsarten, also die Ver- wie die Entriegelung dem Abstand der beiden Zahnleisten 5 und 6 anzupassen. Damit wird ein gleichzeitiger Formschluss der axialen wie der vertikalen Verriegelungselemente im Verriegelungsfall und eine gleichzeitige Entriegelung beider Verriegelungselemente erzielt. Unter Verriegelungselement wird die konstruktive Einheit aus Zahnleiste und zugehörigem Rastelement verstanden.

Bei Lösen des Klemmmechanismus 10 wird, mit Bezug auf die Darstellung der Fig. 7 der Bolzen 11 nach rechts verschoben. Dadurch kann sich die Druckfeder 13 nach rechts ausdehnen und drückt hierbei das Rastelement 7 nach rechts. Das Rastelement 7 grenzt an seiner rechten Außenseite an den Abstandhalter 9, auf dem das vertikale Rastelement 8 befestigt ist. Die Verschiebung des axialen Rastelements 7 wird daher über den Abstandshalter 9 direkt auf das vertikale Rastelement 8 übertragen; in anderen Worten, beide Rastelemente verschieben sich parallel zueinander von den jeweiligen Zahnleisten weg nach rechts. Die, durch die Druckfeder 13 bewirkte Verschiebung der Einheit aus den Rastelementen 7 und 8 sowie dem Abstandshalters 9 wird durch ein Sicherungselement 12 begrenzt, das einen Anschlag für den Abstandshalter 9 darstellt. Unabhängig von der Lage des Bolzens 11 bleibt daher die Position der beiden Rastelemente 7 und 8 und des Abstandshalters 9 relativ zum freien Ende des Bolzens unverändert.

Bei der Fertigung von mechanischen Bauteilen muss immer eine gewisse Schwankungsbreite in den Abmessungen in Kauf genommen werden. Innerhalb einer Produktionsreihe können daher die Abstände der Zahnleisten 5 und 6 nicht immer als konstant angesehen werden. Somit ist nicht für alle Exemplare einer Baureihe garantiert, dass beide Verriegelungselemente im verriegelten Zustand einen Formschluss aufweisen oder im Entriegelungsfall nicht eines der Verriegelungselemente noch kämmt.

In einer besonderen Ausführungsform der vorliegenden Erfindung ist daher der Abstand zwischen den beiden Verriegelungselementen justierbar. Die Justage erfolgt bevorzugt einmalig im Zuge der Montage der Positionseinstellvorrichtung. Für eine unkomplizierte, einfache Justierung des Abstands zwischen den beiden Rastelementen 7 und 8 muss gewährleistet sein, dass die für die Justage benötigten Teile leicht zugänglich angeordnet sind.

In der in der Fig. 7 dargestellten bevorzugten Ausführungsform einer erfindungsgemäßen Positionseinstellvorrichtung ist der Abstandhalter 9 als Buchse mit einem Schraubengewinde an der äußeren Mantelfläche ausgeführt. Das vertikale Rastelement 8 besitzt ein entsprechendes Innengewinde, sodass die Position des Rastelements 8 auf dem Abstandhalter 9 durch Drehen des Abstandhalters im Innengewinde des Rastelements verändert werden kann. Im montierten Zustand der Positionseinstellvorrichtung ist der Abstandhalter 9 sowie das vertikale Rastelement 8 an der Außenseite der Positionseinstellvorrichtung 1 zugänglich, sodass eine Justage mit einfachen Mitteln vorgenommen werden kann. Zur Justage wird das vertikale Rastelement vor dem Zusammenbau der Positionseinstellvorrichtung auf dem Abstandhalter 9 so vorpositioniert, dass unter Berücksichtigung der möglichen Fertigungstoleranzen der Abstand zwischen den beiden Rastelementen 7 und 8 stets größer als der Abstand der beiden Zahnleisten 5 und 6 ist. Weiterhin ist auf dem Abstandhalter 9 eine Kontermutter 14 zur späteren Fixierung der eingestellten Position des Rastelements 8 vormontiert. Nach Zusammenbauen der Positionseinstellvorrichtung 1 wird der Klemmmechanismus in die Verriegelungsposition gebracht, sodass das axiale Rastelement 7 formschlüssig an der axialen Zahnleiste 3 anliegt. Das vertikale Verriegelungselement bestehend aus der Zahnleiste 6 und dem Rastelement 8 befindet sich in diesem Stadium entweder noch im vollständig entriegelten oder aber im gekämmten Zustand. Durch Drehen des Abstandhalters 9 mit einem einfachen Werkzeug oder von Hand wird nun das Rastelement 8 so lange in Richtung der Zahnleiste 6 auf dem Abstandhalter 9 verschoben, bis ein Formschluss zwischen den sich gegenüber liegenden Rastzähnen des Rastelements 8 und der Zahnleiste 6 vorliegt. Diese somit eingestellte Position wird durch Festdrehen der Kontermutter 14 an das Rastelement 8 fixiert. Die Ver- bzw. Entriegelung des vertikalen Verriegelungsmechanismus erfolgt nun parallel und gleichzeitig zum axialen Verriegelungsmechanismus.

Da die Position des vertikalen Rastelements 8 auf dem Abstandhalter 9 nur ein einziges Mal fixiert werden muss, kann die Justage auch mit anderen Mitteln wie z. B. einem einmaligen Aufpressen des Rastelements 8 auf den Abstandhalter 9 vorgenommen werden. Alternativ hierzu kann die Fixierung des Rastelements 8 auf dem Abstandhalter 9 auch mittels Materialaufstauchung erfolgen. Sehr einfach und kostengünstig wird die Fixierung des vertikalen Klemmelements 8 auf dem Abstandhalter 9 mit einer Federscheibe vorgenommen. Die Federscheibe wird hierzu auf dem Abstandhalter 9 gegen das Rastelement 8 gedrückt, bis dieses formschlüssig an der Zahnleiste 6 anliegt. Die Konstruktion der Federscheibe verhindert ein Verrutschen des Rastelements in Richtung des freien Endes des Bolzens 11. Die Passung zwischen dem Rastelement 8 und dem Abstandhalter 9 ist dabei so ausgeführt, dass ein Verschieben des Rastelements einen gewissen Kraftaufwand erfordert, womit sich bei gelöstem Klemmmechanismus das Rastelement 8 nicht von selbst auf dem Abstandhalter 9 verschieben kann.

Die doppelt formschlüssige Verrastung der erfindungsgemäßen Positionseinstellvorrichtung resultiert, wie den Fig. 1 bis 7 zu entnehmen, in einer äußerst kompakten Bauweise, die sich insbesondere durch einen sehr kleinen Abstand zwischen der durch den Bolzen 11 des Klemmmechanismus 10 gegebenen Klemmachse und der Achse der Lenksäule auszeichnet. Ein Verletzungsrisiko im Fall eines Unfalls ist daher insbesondere im gefährdeten Kniebereich eines Fahrers ausgeschlossen.

Die von außen gegebene Justagemöglichkeit des Abstands der beiden Rastelemente 7 und 8 zueinander ermöglicht die Verwendung kostengünstiger und gewichtsoptimierter Gusskonstruktionen. Die axiale Zahnleiste 5 kann, wie besonders in Fig. 5 zu sehen, in das Gussgehäuse des Lenksäulenträgers 3 eingelegt werden und benötigt daher keine weitere Fixierung durch z. B. Schrauben oder Schweißen. Eine Integration der axialen Zahnleiste verringert zudem die Fehlerwahrscheinlichkeit beim Zusammenbau der Positionseinstellvorrichtung.

### Bezugszeichenliste

- 1: Positionseinstellvorrichtung
- 2: Lenksäulenkörper bzw. Säulenmantel einer Kraftfahrzeuglenksäule
- 3: erster Träger (Lenksäulenträger)
- 4: zweiter Träger (Karosserieträger)
- 5: erste Zahnleiste
- 6: zweite Zahnleiste
- 7: erstes Rastelement
- 8: zweites Rastelement
- 9: Abstandhalter
- 10: Klemmmechanismus
- 11: stangenförmiger Fortsatz (Bolzen)
- 12: Sicherungselement
- 13: Druckfeder
- 14: Kontermutter
- 15: Gleitscheibe

## Patentansprüche

1. Positionseinstellvorrichtung für eine Kraftfahrzeuglenksäule (2) mit
- einem ersten Träger (3) zur Verbindung der Positionseinstellvorrichtung (1) mit der Kraftfahrzeuglenksäule (2),
- einem zweiten Träger (4) zur Verbindung der Positionseinstellvorrichtung (1) mit der Karosserie eines Kraftfahrzeugs,
- einer am ersten Träger (3) angeordneten ersten Zahnleiste (5) mit zumindest einer Reihe von Rastzähnen und einer Ausrichtung der Reihe von Rastzähnen in Richtung einer ersten Verstellrichtung,
- einer am zweiten Träger (4) angeordneten zweiten Zahnleiste (6) mit zumindest einer Reihe von Rastzähnen und einer Ausrichtung der Reihe von Rastzähnen in Richtung einer zweiten Verstellrichtung,
- einem ersten Rastelement (7) mit zumindest einer Reihe von Rastzähnen, die mit der Reihe von Rastzähnen der ersten Zahnleiste (5) in Eingriff gebracht werden kann,
- einem zweiten Rastelement (8) mit zumindest einer Reihe von Rastzähnen, die mit der Reihe von Rastzähnen der zweiten Zahnleiste (6) in Eingriff gebracht werden kann,
- einem Abstandshalter (9) zur definierten Beabstandung des zweiten Rastelements (8) relativ zum ersten Rastelement (7), und
- einem Klemmmechanismus (10) zur simultanen Ver- und Entriegelung des ersten (7) und zweiten (8) Rastelements mit jeweils der ersten (5) bzw, zweiten (6) Zahnleiste, **dadurch gekennzeichnet, daß** während der Ver- und Entriegelung die Beabstandung zwischen dem ersten (7) und zweiten (8) Rastelement konstant ist.

2. Positionseinstellvorrichtung nach Anspruch 1, **dadurch gekennzeichnet, dass** die Position des zweiten Rastelements (8) auf dem Abstandhalter (9) zumindest einmal justierbar ist

3. Positionseinstellvorrichtung nach Anspruch 2, **dadurch gekennzeichnet, dass** die Position des zweiten Rastelements (8) auf dem Abstandhalter (9) mittels einer Schraubgewindeverbindung justierbar ist.

4. Positionseinstellvorrichtung nach Anspruch 2, **dadurch gekennzeichnet, dass** die Position des zweiten Rastelements (8) auf dem Abstandhalter (9) mittels eines einmaligen Aufpressvorgangs justierbar ist.

5. Positionseinstellvorrichtung nach Anspruch 2, **dadurch gekennzeichnet, dass** die Position des zweiten Rastelements (8) auf dem Abstandhalter (9) mittels einer Federscheibe justierbar ist.

6. Positionseinstellvorrichtung nach Anspruch 2, **dadurch gekennzeichnet, dass** die Position des zweiten Rastelements (8) auf dem Abstandhalter (9) mittels Materialaufstauchung justierbar ist.

7. Positionseinstellvorrichtung nach einem der Ansprüche 2 bis 6, **dadurch gekennzeichnet, dass** die Justierung der Position des zweiten Rastelements (8) auf dem Abstandhalter (9) im Außenbereich der Positionseinstellvorrichtung (1) vornehmbar ist

8. Positionseinstellvorrichtung nach einem der Ansprüche 1 bis 7, **dadurch gekennzeichnet, dass** ein stangenförmiger Fortsatz (11) des Klemmmechanismus (10) beweglich durch den ersten (3) und zweiten (4) Träger, die erste (5) und zweite (6) Zahnleiste, das erste (7) und zweite (8) Rastelement und den Abstandhalter (9) geführt ist.

9. Positionseinstellvorrichtung nach Anspruch 8, **dadurch gekennzeichnet, dass** der stangenförmigen Fortsatz (11) ein Sicherungselement (12) zur Begrenzung einer Bewegung von auf dem stangenförmigen Fortsatz verschiebbaren Elementen (13, 7, 9, 8, 14) der Positionseinrichtung (1) über ein Ende des stangenförmigen Fortsatzes (11) hinaus aufweist.

10. Positionseinstellvorrichtung nach Anspruch 9, **dadurch gekennzeichnet, dass** das erste (7) und das zweite (8) Rastelement mittels einer Druckfeder (13) gegen das Sicherungselement (12) des stangenförmigen Fortsatzes (11) gedrückt gehalten sind.

11. Positionseinstellvorrichtung nach einem der Ansprüche 1 bis 10, **dadurch gekennzeichnet, dass** die erste Zahnleiste (5) und der erste Träger (3) zusammen ein Bauteil formen.

12. Positionseinstellvorrichtung nach einem der Ansprüche 1 bis 11, **dadurch gekennzeichnet, dass** die zweite Zahnleiste (6) und der zweite Träger (4) zusammen ein Bauteil formen.

13. Kraftfahrzeuglenksäule mit einer Positionseinstellvorrichtung nach einem der Ansprüche 1 bis 12, **dadurch gekennzeichnet, dass** die erste Verstellrichtung der Positionseinstellvorrichtung (1) axial zur Kraftfahrzeuglenksäule (2) und die zweite Verstellrichtung der Positionseinstellvorrichtung (1) senkrecht zur Achse der Kraftfahrzeuglenksäule (2) ausgerichtet ist.

14. Kraftfahrzeuglenksäule nach Anspruch 13, **dadurch gekennzeichnet, dass** die zweite Verstellrichtung der Positionseinstellvorrichtung (1) eine Höhenverstellung oder eine Neigungsverstellung der Kraftfahrzeuglenksäule (2) ermöglicht.

## Claims

1. Position setting mechanism for a motor vehicle steering column (2) comprising
- a first mount (3) for connecting the position setting mechanism (1) to the vehicle steering column (2),
- a second mount (4) for connecting the position setting mechanism (1) to the body of a vehicle,
- a first toothed rack (5) with at least one row of catch teeth disposed on the first mount (3), which row of teeth is oriented in the direction of a first adjustment direction,
- a second toothed rack (6) with at least one row of catch teeth disposed on the second mount (4), which catch teeth are oriented in the direction of a second adjustment direction,
- a first catch element (7) with at least one row of catch teeth which can be moved into engagement with the row of catch teeth of the first toothed rack (5),
- a second catch element (8) with at least one row of catch teeth which can be moved into engagement with the row of catch teeth of the second toothed rack (6),
- a spacer (9) for maintaining a defined spacing of the second catch element (8) relative to the first catch element (7), and
- a clamping mechanism (10) for simultaneously locking and unlocking the first (7) and second catch element (8) respectively to the first (5) and second (6) toothed rack, **characterised in that** the spacing between the first (7) and second (8) catch element is constant during the locking and unlocking operation.

2. Position setting mechanism as claimed in claim 1, **characterised in that** the position of the second catch element (8) on the spacer (9) can be adjusted at least on a one-off basis.

3. Position setting mechanism as claimed in claim 2, **characterised in that** the position of the second catch element (8) on the spacer (9) can be adjusted by means of a screw thread connection.

4. Position setting mechanism as claimed in claim 2, **characterised in that** the position of the second catch element (8) on the spacer (9) can be adjusted by means of a one-off press-fitting operation.

5. Position setting mechanism as claimed in claim 2, **characterised in that** the position of the second catch element (8) on the spacer (9) can be adjusted by means of a spring washer.

6. Position setting mechanism as claimed in claim 2, **characterised in that** the position of the second catch element (8) on the spacer (9) can be adjusted by means of material compression.

7. Position setting mechanism as claimed in one of claims 2 to 6, **characterised in that** the adjustment to the position of the second catch element (8) on the spacer (9) can be made in the external region of the position setting mechanism (1).

8. Position setting mechanism as claimed in one of claims 1 to 7, **characterised in that** a rod-shaped projection (11) of the clamping mechanism (10) is displaceably guided by the first (3) and second (4) mount, the first (5) and second (6) toothed rack, the first (7) and second (8) catch element and the spacer (9).

9. Position setting mechanism as claimed in claim 8, **characterised in that** the rod-shaped projection (11) has a locking element (12) for restricting a movement of the elements (13, 7, 9, 8, 14) of the positioning mechanism (1) which can move on the rod-shaped projection beyond an end of the rod-shaped projection (11).

10. Position setting mechanism as claimed in claim 9, **characterised in that** the first (7) and the second (8) catch element are held pressed against the locking element (12) of the rod-shaped projection (11) by means of a compression spring (13).

11. Position setting mechanism as claimed in one of claims 1 to 10, **characterised in that** the first toothed rack (5) and the first mount (3) together form one component.

12. Position setting mechanism as claimed in one of claims 1 to 11, **characterised in that** the second toothed rack (6) and the second mount (4) together form one component.

13. Motor vehicle steering column with a position setting mechanism as claimed in one of claims 1 to 12, **characterised in that** the first adjustment direction of the position setting mechanism (1) is oriented axially with respect to the motor vehicle steering column (2) and the second adjustment direction of the position setting mechanism (1) is oriented perpendicular to the axis of the motor vehicle steering column (2).

14. Motor vehicle steering column as claimed in claim 13, **characterised in that** the second adjustment direction of the position setting mechanism (1) permits an adjustment in height or an adjustment in inclination of the motor vehicle steering column (2).

## Revendications

1. Dispositif de réglage de position pour une colonne de direction de véhicule (2), avec
- un premier support (3) pour relier le dispositif de réglage de position (1) à la colonne de direction de véhicule (2),
- un second support (4) pour relier le dispositif de réglage de position (1) à la carrosserie d'un véhicule,
- une première plaquette dentée (5) disposée sur le premier support (3) avec au moins une rangée de dents de crantage et avec une orientation de la rangée de dents de crantage dans le sens d'une première direction de déplacement,
- une seconde plaquette dentée (6) disposée sur le second support (4) avec au moins une rangée de dents de crantage et avec une orientation de la rangée de dents de crantage dans le sens d'une seconde direction de déplacement,
- un premier élément de crantage (7) avec au moins une rangée de dents de crantage qui peuvent être amenées en prise avec la rangée de dents de crantage de la première plaquette dentée (5),
- un second élément de crantage (8) avec au moins une rangée de dents de crantage qui peuvent être amenée en prise avec la rangée de dents de crantage de la seconde plaquette dentée (6),
- une entretoise (9) pour maintenir un écartement défini du second élément de crantage (8) par rapport au premier élément de crantage (7), et
- un mécanisme de serrage (10) pour le verrouillage et le déverrouillage simultané du premier (7) et du second (8) élément de crantage respectivement avec la première (5) et la seconde (6) plaquette dentée, **caractérisé en ce que**, pendant le verrouillage et le déverrouillage, l'écartement entre le premier (7) et le second (8) élément de crantage est constant.

2. Dispositif de réglage de position selon la revendication 1, **caractérisé en ce que** la position du second élément de crantage (8) sur l'entretoise (9) est ajustable au moins une fois.

3. Dispositif de réglage de position selon la revendication 2, **caractérisé en ce que** la position du second élément de crantage (8) sur l'entretoise (9) est ajustable au moyen d'une liaison à filetage de vis.

4. Dispositif de réglage de position selon la revendication 2, **caractérisé en ce que** la position du second élément de crantage (8) sur l'entretoise (9) est ajustable par une opération unique d'emmanchement à force.

5. Dispositif de réglage de position selon la revendication 2, **caractérisé en ce que** la position du second élément de crantage (8) sur l'entretoise (9) est ajustable au moyen d'une rondelle élastique.

6. Dispositif de réglage de position selon la revendication 2, **caractérisé en ce que** la position du second élément de crantage (8) sur l'entretoise (9) est ajustable par refoulement de matière.

7. Dispositif de réglage de position selon une des revendications 2 à 6, **caractérisé en ce que** l'ajustement de la position du second élément de crantage (8) sur l'entretoise (9) peut être effectué dans la zone extérieure du dispositif de réglage de position (1).

8. Dispositif de réglage de position selon une des revendications 1 à 7, **caractérisé en ce qu'**un prolongement en forme de tige (11) du mécanisme de serrage (10) traverse de manière mobile le premier (3) et le second (4) support, la première (5) et la seconde (6) plaquette dentée, le premier (7) et le second (8) élément de crantage et l'entretoise (9).

9. Dispositif de réglage de position selon la revendication 8, **caractérisé en ce que** le prolongement en forme de tige (11) comporte un élément d'arrêt (12) pour limiter un déplacement des éléments (13, 7, 9, 8, 14) du dispositif de positionnement (1) aptes à coulisser sur le prolongement en forme de tige au-delà d'une extrémité du prolongement en forme de tige (11).

10. Dispositif de réglage de position selon la revendication 9, **caractérisé en ce que** le premier (7) et le second (8) élément de crantage sont maintenus en pression contre l'élément d'arrêt (12) du prolongement en forme de tige (11) au moyen d'un ressort de pression (13).

11. Dispositif de réglage de position selon une des revendications 1 à 10, **caractérisé en ce que** la première plaquette dentée (5) et le premier support (3) forment ensemble un élément structurel.

12. Dispositif de réglage de position selon une des revendications 1 à 11, **caractérisé en ce que** la seconde plaquette dentée (6) et le second support (4) forment ensemble un élément structurel.

13. Colonne de direction de véhicule avec un dispositif de réglage de position selon une des revendications 1 à 12, **caractérisée en ce que** la première direction de déplacement du dispositif de réglage de position (1) est orientée axialement par rapport à la colonne de direction de véhicule (2), et la seconde direction de déplacement du dispositif de réglage de position (1) est orientée perpendiculairement à l'axe de la colonne de direction de véhicule (2).

14. Colonne de direction de véhicule selon la revendication 13, **caractérisée en ce que** la seconde direction de déplacement du dispositif de réglage de position (1) autorise un réglage en hauteur ou un réglage d'inclinaison de la colonne de direction de véhicule (2).
